# EUROPEAN PATENT SPECIFICATION

(11) **EP 2 895 253 B1**
(45) Date of publication and mention of the grant of the patent: **07.02.2018**
(21) Application number: 12805647.0
(22) Date of filing: 05.12.2012
(51) Int. Cl.: B01D 46/12, B01D 46/00, B01D 46/52

(54) **A FILTER FRAME**
RAHMEN FÜR FILTER
CADRE FILTRANT

(30) Priority: 12.09.2012 WO PCT/EP2012/067746; 21.09.2012 WO PCT/EP2012/068707
(43) Date of publication of application: 22.07.2015
(73) Proprietor: Camfil AB, 111 34 Stockholm (SE)
(72) Inventor: HEDLUND, Kenny, S-619 33 Trosa (SE)
(74) Representative: Awapatent AB
(86) International application number: PCT/EP2012/074545
(87) International publication number: WO 2014/040657

(56) References cited:
- EP-A1- 1 582 248
- WO-A1-01/97946
- WO-A1-2010/151580
- DE-A1- 2 739 815
- US-A- 3 494 113
- US-A1- 2009 193 773
- US-A1- 2012 011 817

## Description

### FIELD OF THE INVENTION

The present invention relates to filter assemblies for removing particles from an air flow, and more particularly to a filter frame for receiving a media pack, a filter assembly comprising such a filter frame, and a method of assembling such a filter frame.

### BACKGROUND OF THE INVENTION

Filter assemblies comprising media packs disposed in a frame structure are known. A media pack is typically formed from a sheet of filter media, e.g. a fiberglass sheet, or a nonwoven polyester sheet or membrane media or combinations thereof or the like, which is pleated to increase the effective filtering area of the filter body, and provided with cover plates. To provide mechanical support and/or to combine a plurality of media packs, the media pack is typically arranged in a frame structure.

A prior art filter frame for receiving several media packs is shown in US-6955696, which discloses a filter frame comprising two gable plates, which have male connection elements, and two frame beams having female connection elements, which are interconnected with the male connection elements of the gable plates. Thereby a square frame is formed which supports the media packs. In other words, the media packs rest on the frame beams and on support structures of the gable plates. However, that structure requires a high rigidity of the two frame beams and a high stiffness of the media pack due to the small contact area with the frame. It would be desired to be able to mitigate these requirements. Another similar filter frame is described in WO2010/151580.

### SUMMARY OF THE INVENTION

It is an object of the present invention to provide a filter frame that eliminates, or at least reduces the drawbacks mentioned above.

The object is achieved by a filter frame according to the present invention as defined in claim 1 of the appended claims. The object is also achieved by a filter assembly as defined in claim 11 and a method of assembling a filter frame as defined in claim 12 of the appended claims.

Thus, in accordance with a first aspect of the present invention there is provided a filter frame for receiving a media pack, the filter frame comprising a front plate, and first and second gable plates arranged at opposite ends of the front plate and extending perpendicular or at an angle to the front plate. The front plate comprises a groove at each of said ends. A front edge portion of each gable plate has been received in a respective one of the grooves, and each gable plate comprises a retainment member comprising a snap-lock element arranged at the front edge portion. The retainment member has been engaged with a complementary retainment member of the front frame. By providing a full front plate and engage the gable plates with the front plate, a structure being more rigid in itself is obtained.

Thereby a fast and precise assembly is obtained.

In accordance with an embodiment of the filter frame, the snap-lock element comprises a resilient tongue extending perpendicular or at an angle to a front edge of the gable plate, and having a shoulder; wherein the complementary retainment member comprises a recess; and wherein the shoulder has been received in the recess.

In accordance with an embodiment of the filter frame, the resilient tongue is arranged at a side edge of the gable plate, and wherein the recess is arranged at a rim of the front plate. Thereby the manufacturing of the gable plates including its snap-lock element is facilitated. It should be noted that more than one resilient tongue can be arranged, such as a second tongue at the opposite side edge of the gable plate.

In accordance with an embodiment of the filter frame, the retainment member comprises a protrusion protruding from the edge portion perpendicular to the primary extension of the gable plate; wherein the complementary retainment member comprises a notch arranged at a rim of the front plate; and wherein the protrusion has been received in the notch. The protrusion-notch pair is simple to manufacture and can be provided with a substantial strength at small dimensions. It should be noted that several protrusions, and complementary notches can be arranged, such as distributed along the length of the front edge portion.

In accordance with an embodiment of the filter frame, the protrusion is wedge-shaped and the notch is V-shaped. Thereby, the protrusion is guided into the notch at assembly.

In accordance with an embodiment of the filter frame, each gable plate has at least one V-shaped plate portion extending between the front edge portion and an opposite rear edge portion of the gable plate, with the top of the V facing the front edge portion, said at least one V-shaped portion being defined by a channel arranged to receive a gable of the media pack.

In accordance with an embodiment of the filter frame, it further comprises a rear plate engaged with rear edge portions of the first and second gable plates. The rear plate stabilizes the filter frame structure.

### BRIEF DESCRIPTION OF THE DRAWINGS

The invention will now be described in more detail and with reference to the appended drawings in which:
Fig. 1a is a schematic exploded view of an embodiment of a filter assembly according to the invention;
Fig. 1b is a perspective view of the filter assembly of Fig. 1a;

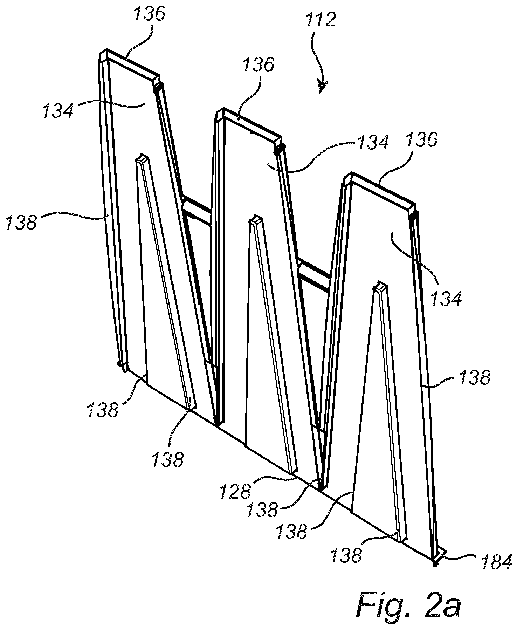

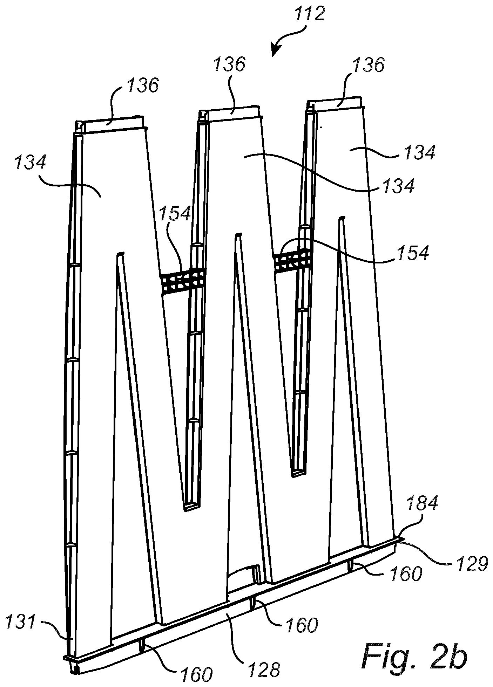

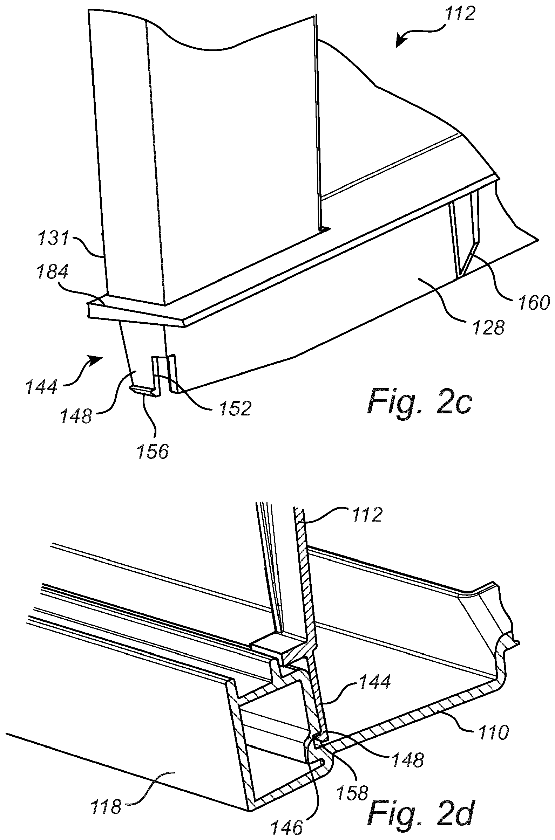

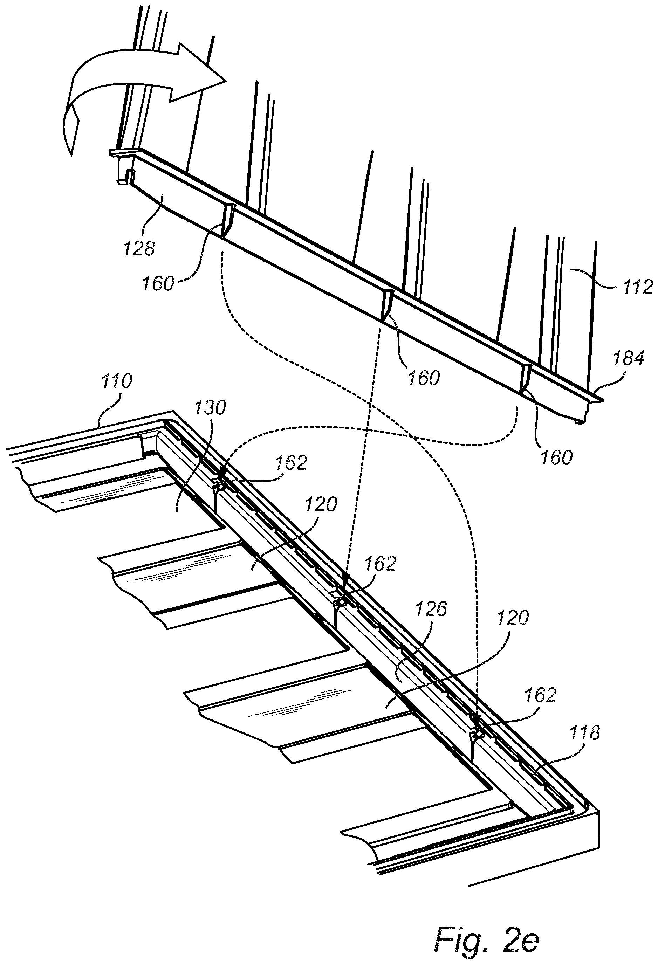

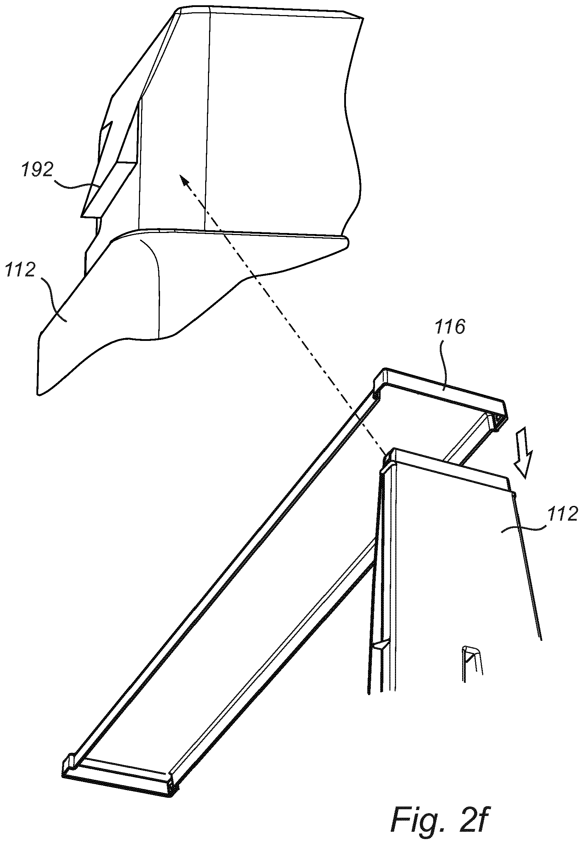

Figs. 2a-2f are schematic views of filter frame parts of the filter assembly.
Fig. 3 is a schematic cross-section of filter frame parts according to the invention.

### DESCRIPTION OF PREFERRED EMBODIMENTS

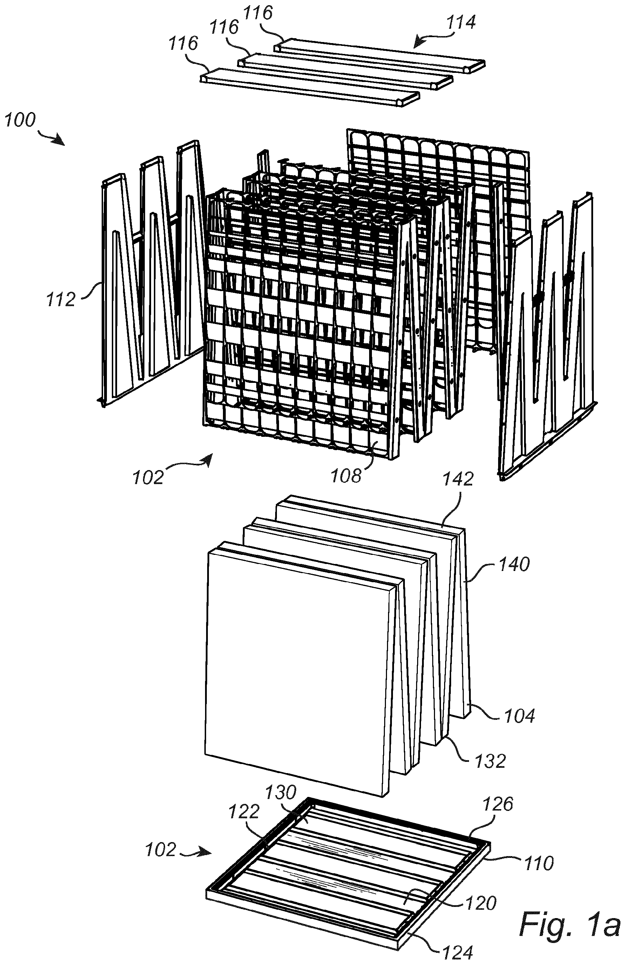

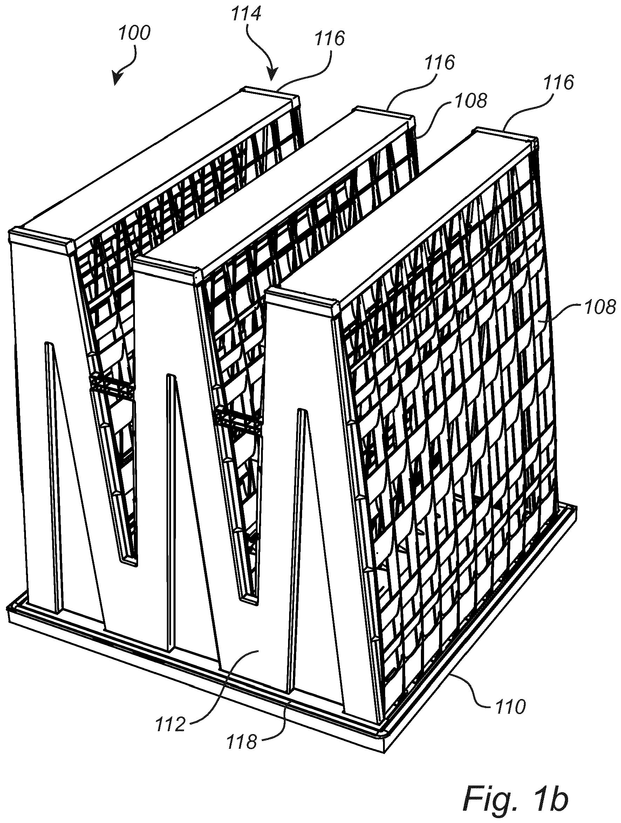

According to an embodiment of the filter assembly 100, it comprises an embodiment of the filter frame 102, and several, in this embodiment six, media packs 104, carried by the filter frame 102, whereby the media packs 104 have been shown separately in figure 1a for reasons of clarity. The media packs 104 can be of any suitable kind, but typically each media pack 104 comprises a sheet of filter media 106, which has been pleated to an accordion shape in order to increase the effective filtering area of the filter body, and backing nets 108 containing the pleated sheet of filter media 106. Backing nets 108 are arranged to let air pass through the filter media 106, or even arranged to guide the passing air in a preferred direction and optimized for low pressure drop thereover.

The filter frame 102 comprises a front plate 110, two gable plates 112, and a rear plate 114, embodied by three separate plate elements 116. The front plate 110 is rectangular and comprises a peripherally extending rim 118, and parallel ribs 120 extending between opposite ends 122, 124 of the front plate 110. The front plate 110 has a groove 126 at each of the ends 122, 124. Each groove 126 extends along a respective portion of the rim 118 at an inside thereof, and adjacent thereto. The gable plates 112 are arranged at the opposite ends 122, 124 of the front plate 110. Each gable plate 112 has a front edge portion 128, which has been received in the groove 126. Each gable plate 112 extends perpendicular to the front plate 110, and rearwards therefrom. The media packs 104 are plate shaped and extend obliquely substantially in the direction of the air flow from the front plate 110, although they extend close to perpendicular to the front plate 110. The media packs 104 are arranged side by side, leaning alternately to one side and to the other side, thereby forming a zigzag structure. More particularly, they are arranged in pairs, each pair forming a V shape, such that the mouth of the V shape faces the front plate 110. A front edge 132 of each media pack 104 abuts against one of the ribs 120, and apertures 130 between the ribs 120 are aligned with the mouths of the V shapes. Each gable plate 112 has three V-shaped portions 134 extending between the front edge portion 128 and an opposite rear edge portion 136 of the gable plate 112, with the mouth of each V-shaped portion 134 facing the front edge portion 128. The V-shaped portions 134 are joined along a minor fraction of their length, extending from the mouth towards the other end, while there are gaps between them along a major part of their length. Reinforcing elements 154 may be provided extending between two adjacent V-shaped portions to further increase the structural rigidity of the gable plate 112. These reinforcing elements 154 can also serve as grips when handling the gable plates 112 or (semi-) assembled filter frame assemblies 100. Each V-shaped portion 134 is defined by a channel, having side walls 138. Each V-shaped channel has received gable portions, or side edge portions, 140 of two media packs 104. Of course, it is also possible within the scope of the appended claims for the gable plates 112 to have additional or less than three V-shaped prortions, such as one, two, four or more. Also, the gable plates 112 may not have V-shaped portions at all but may for example be provided in the form of covering having a trapezoid shape or similar without openings between adjacent pairs of media packs. Each plate element 116 of the rear plate 114 covers rear edge portions 142 of two media packs 104 forming a V-shape. The plate elements 116 each extend between, and are attached to, a respective fraction of the rear edge portion 136 of each gable plate 112. Consequently, the front plate 110, the gable plates 112, and the rear plate 114 support each other to form a strong filter frame 102, which carries the media packs 104.

An important part of the filter frame structure is the engagement between the gable plates 112 and the front plate 110. As mentioned above, each one of the gable plates 112 has been received in a respective groove 126 of the front plate 110. In order to secure a proper engagement between the front plate 110 and the gable plates 112, each gable plate is provided with a retainment member 144, and the front plate 110 is provided with a complementary retainment member 146 for each gable plate 112. The retainment member 144 of each gable plate 112 comprises a snap-lock element 148 at either side of the gable 112, and more particularly at each end of the front edge portion 128, at a side edge 129, 131 of the gable plate 112. The snap-lock element 148 comprises a resilient tongue 152, which extends perpendicular or at an angle to a front edge of the gable plate, and which has a shoulder 156. The complementary retainment member 146 comprises a recess 158, which is arranged at the rim 118 of the front plate 110. The shoulder 156 has been received in the recess 158. Thereby the gable plate 112 is in fixed engagement with the front plate 110. However, in order to further enhance the stability of the engagement, the retainment member 144 further comprises three protrusions 160, which protrude from the front edge portion 128 perpendicular to the primary extension of the gable plate 112. The protrusions 160 are distributed along the length of the front edge portion 128. The complementary retainment member 146 further comprises three notches 162, which are arranged at the rim 118 of the front plate 110, one notch at each respective protrusion. The protrusions 160 have been received in the notches 162. Each protrusion 160 is wedge-shaped, and each notch 162 is V-shaped. The sizes of the protrusions 160 and the notches 162 are such that they are connected to each other in a press fit when the gable plate 112 is inserted into engagement with the front plate 110. The snap-lock elements 148 and the press fit connection between the protrusions 160 and notches 162 ensure a reliable coupling between the gable plates 112 and the front plate 110 even without the use of any adhesives such that the filter frame can be handled, e.g. lifted and moved around, without the need of any temporary securing means or similar. It should be noted that as regards the retainment member 144, the number of protrusions 160 can range from zero to several, and the number of snap-lock elements 148 can range from zero to several as well. It is desired to have at least one snap-lock element or protrusion, and it is preferred to have two snap in elements with the shown placement and at least one protrusion.

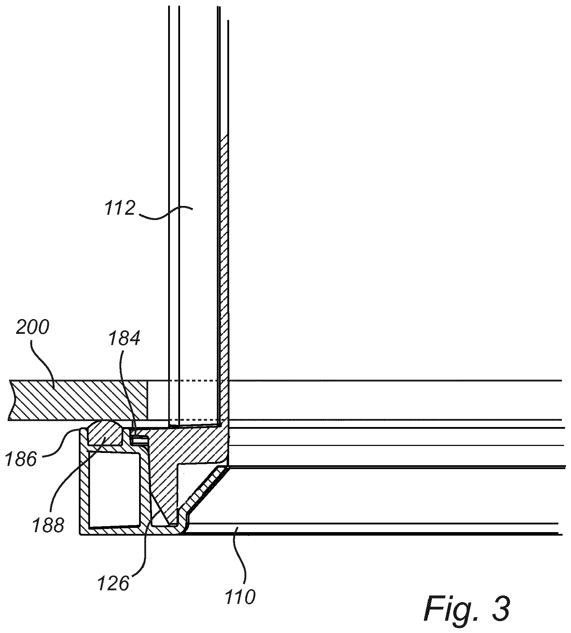

In figure 3 it is shown that the gable plates 112 each comprises an abutment surface 184 near the front edge portion 128. This abutment surface 184 is intended to bear against a filter bank grid 200, made for example from steel beams, when mounted thereto. The front plate 110 is provided with a sealing surface 186 having a sealing member 188, here in the form of a sealing strip made from polyurethane or similar. The sealing surface 186 is flush with the abutment surface 184 when the gable plates 112 are mounted to the front plate 110 such that both surfaces will bear against the filter bank grid when mounted thereto. It should be noted that in figure 3, for reasons of clarity, the abutment surface 184 of the gable plate 112 and sealing surface 186 of the front plate 110 are not yet in contact with the filter bank grid 200. Instead, figure 3 shows a position where the sealing member 188 barely touches the grid 200. It is also possible, and sometimes preferable, to arrange the sealing surface 186 of the front plate 110 forwardly displaced relative the abutment surface 184. If, for example, a thick and/or less compressible sealing member 188 is used, too much load may be transferred to the front plate 110 if the sealing surface 186 and abutment surface 184 are arranged flush with each other. By arranging the sealing surface 186 somewhat forwardly displaced relative the abutment surface 184, the abutment surface 186 will reach the front surface of grid 200 earlier, thus not requiring excessive compression of the sealing member 188. As will be described below, the filter frame assembly is to be fastened by means of clamps or similar that firmly squeeze the filter frame assembly 100 against the filter bank grid 200. When this is done the sealing member 188 will be compressed and the abutment surface 184 of the gable plate will bare against the filter bank grid 200 in a load absorbing manner. This results in that the forces originating from the air flowing through the filter media will be transmitted directly from the media pack 104 to the gable plates 112 and thereafter to the filter bank grid and only a minor part of these forces, if any at all, will be transmitted to the filter bank grid by the front plate 110. This is favorable since the connection and sealing between the front plate 110 and gable plates 112 will not be exposed to any substantial stress, thereby avoiding air leakage between them. The abutment surface 184 is here executed in the form of a flange running the whole width of a front part of an outer side of the gable plate 112 as well as on the side edges 129, 131. This ensures uniform load transfer and good sealing properties between sealing surface 186 and the filter bank grid 200. Other forms of execution of the flange are of course possible, for example in order to increase structural stability of the flange.

The filter frame is assembled as follows. The front plate 110, comprising the grooves 126 at the two opposite ends 122, 124 thereof is provided. The first and second gable plates 112 are provided and mounted at the front plate 110. For each gable plate 112 the mounting includes inserting a front edge portion 128 of the gable plate 112 into a respective groove 126, and forcing the retainment member 144 into engagement with the corresponding retainment member 146 of the front plate 110. Thereby a part of the filter frame 102 which is ready to receive the media packs 104 has been assembled. In order to complete the assembling process to a complete filter assembly 100, the next step thus is to mount the media packs 104 including backing nets 108, and then the plate elements 116 of the rear plate 114 are mounted, wherein they are forced into engagement with the rear edge portions 136 such that snap-lock elements 192 of the gable plates 112 snaps into a locking position in the corresponding part in each rear plate 116. As mentioned earlier, the filter assembly is now ready to be handled and could for example be transported to a different location without the necessity of any temporary securing means or similar. And then, in a last step of assembling the filter frame, an adhesive is used to seal and fixate the filter frame 102. The mere presence of adhesive in the spaces between the different constructional details will prevent the snap-lock elements from leaving their locked position, which adds rigidity to the structure even before the adhesive has cured. Obviously, curing will further increase rigidity and stability of the structure by bonding the gable plates 112 and the front plate 110 together. Since the retainment member 144 will be glued into engagement with the corresponding retainment member 146 the snap-lock connection and the press fit connection respectively will become even stronger. Other modes of mounting are obviously also possible, such as intermediate supply of adhesive.

Thereafter, the filter frame assembly is inserted and secured to the filter bank grid 200, typically the filter frame assembly is clamped to the filter bank grid 200 by means of a plastic or metal clamp which is fixed to the filter bank grid by means of a bolt and a fly nut or similar. Thereby, the filter frame assembly can be tightly squeezed between the clamp and the grid 200 without the use of through bolts or similar that would jeopardize tightness of the construction. When doing so, both the abutment surface 184 of the gable plate 112 and the sealing surface 186 of the front plate 110 are pressed against the filter bank grid 200 such that sealing is assured. When in use, the forces acting on the filter media 106 due to the air flow there through will be transmitted directly from the gable plates 112 to the filter bank grid 200 and no major forces will be transmitted from the gable plates 112 to the front plate 110 such that the sealing properties between the gable plates 112 and the front plate 110 can be maintained at all times.

Finally, it is realized that the use of structure of the present invention with retainment members 144, 146 is a more user-oriented solution than known prior art constructions since it allows for a user to handle the frame assembly without the need of any temporary securing means or similar before the adhesive has been added and allowed to cure. Further, the provision of an abutment surface on the gable plate and a sealing surface on the front plate provides a construction with increased load bearing capacity while at same time improving sealing properties of the filter frame assembly. It should also be noted that the positions of the retainment member and the complimentary retainment member could be altered, e.g. the snap-lock could just as well be arranged on the front edge of the gable plate and the protrusion on the side edge of the gable plate and the corresponding goes for the complimentary parts of the front plate.

## Claims

1. A filter frame (102) for receiving a media pack (104), the filter frame (102) comprising a front plate (110), and first and second gable plates (112) arranged at opposite ends (122, 124) of the front plate (110) and primarily extending perpendicular to the front plate (110), wherein the front plate (110) comprises a groove (126) at each of said ends (122, 124), wherein a front edge portion (128) of each gable plate (112) has been received in a respective one of the grooves (126), and wherein each gable plate (112) comprises a retainment member (144) comprising a snap-lock element (148) arranged at the front edge portion (128), which retainment member (144) has been engaged with a complementary retainment member (146) of the front plate (110).

2. The filter frame (102) according to claim 1 wherein the snap-lock element (148) comprises a resilient tongue (152) extending perpendicular to a front edge (128) of the gable plate (112), and having a shoulder (156); wherein the complementary retainment member (146) comprises a recess (158); and wherein the shoulder (156) has been received in the recess (158).

3. The filter frame (102) according to claim 2 wherein the resilient tongue (152) is arranged at a side edge (129, 131) of the gable plate (112), and wherein the recess (158) is arranged at a rim (118) of the front plate (110).

4. The filter frame (102) according to any one of the preceding claims, wherein the retainment member (144) comprises further a protrusion (160) protruding from the front edge portion (128) perpendicular to the primary extension of the gable plate (112); wherein the complementary retainment member (146) further comprises a notch (162) arranged at a rim (118) of the front plate (110); and wherein the protrusion (160) has been received in the notch (162).

5. The filter frame (102) according to claim 4 wherein the protrusion (160) is wedge-shaped and the notch (162) is V-shaped.

6. The filter frame (102) according to any one of the preceding claims, wherein each gable plate (112) has at least one V-shaped plate portion (134) extending between the front edge portion (128) and an opposite rear edge portion (136) of the gable plate (112), with the mouth of the V-shaped portion (134) facing the front edge portion (128), said at least one V-shaped portion (134) being defined by a channel arranged to receive a gable (140) of the media pack (104).

7. The filter frame (102) according to any one of the preceding claims, further comprising a rear plate (114) engaged with rear edge portions (136) of the first and second gable plates (112).

8. The filter frame (102) according to claim 7 wherein the rear plate (114) is engaged to the gable plate (112) by means of a snap lock element (192).

9. The filter frame (102) according to claim 8 wherein the snap lock element (192) comprises a resilient tongue provided on the gable plate (112) and a recess provided at said rear plate (114) and wherein the resilient tongue extend perpendicular to said rear edge of the gable plate, and having a shoulder; and wherein the shoulder of the resilient tongue has been received in the recess.

10. The filter frame (102) according to claim 9, wherein the snap lock element (192) comprises a protrusion provided on the gable plate and extending perpendicular to said rear edge of the gable plate (112) and a recess provided at said rear plate (114) and wherein the recess is resilient such that the protrusion of the snap-lock element can be introduced into and received within the recess in locking position.

11. A filter assembly comprising a filter frame (102) according to any one of the preceding claims, and a media pack (104) arranged in the filter frame (102).

12. A method of assembling a filter frame (102) as claimed in claim 1, comprising:
- inserting the front edge portion (128) of the gable plate (112) into the respective groove (126), and forcing the retainment member (144) provided at the front edge portion (128) into engagement with the corresponding retainment member (146) of the front plate (110).

## Patentansprüche

1. Filterrahmen (102) zum Aufnehmen einer Mediumpackung (104), wobei der Filterrahmen (102) eine Frontplatte (110) und erste und zweite Gabelplatten (112) umfasst, welche auf gegenüberliegenden Enden (122, 124) der Frontplatte (110) angeordnet sind und sich hauptsächlich senkrecht zur Frontplatte (110) erstrecken, wobei die Frontplatte (110) eine Nut (126) auf beiden Enden (122, 124) umfasst, wobei ein Frontkantenabschnitt (128) jeder Gabelplatte (112) in eine entsprechende Nut (126) aufgenommen ist, und wobei jede Gabelplatte (112) ein Rückhalteelement (144) umfasst, welches ein Schnappverschlusselement (148) umfasst, welches am Frontkantenabschnitt (128) angeordnet ist, wobei das Rückhalteelement (144) mit einem komplementären Rückhalteelement (146) auf der Frontplatte (110) in Eingriff gebracht ist.

2. Filterrahmen (102) nach Anspruch 1, wobei das Schnappverschlusselement (148) eine elastische Zunge (152) umfasst, welche sich senkrecht zu einer Frontkante (128) der Gabelplatte (112) erstreckt, und eine Schulter (156) aufweist; wobei das komplementäre Rückhalteelement (146) eine Vertiefung (158) umfasst; und wobei die Schulter (156) in die Vertiefung (158) aufgenommen ist.

3. Filterrahmen (102) nach Anspruch 2, wobei eine elastische Zunge (152) an einer Seitenkante (129, 131) der Gabelplatte (112) angeordnet ist, und wobei die Vertiefung (158) an einem Rand (118) der Frontplatte (110) angeordnet ist.

4. Filterrahmen (102) nach einem der vorhergehenden Ansprüche, wobei das Rückhalteelement (144) ferner einen Vorsprung (160) umfasst, welcher vom Frontkantenabschnitt (128) senkrecht zur Haupterstreckung der Gabelplatte (112) vorsteht; wobei das komplementäre Rückhalteelement (146) ferner einen Einschnitt (162) umfasst, welcher an einem Rand (118) der Frontplatte (110) angeordnet ist; und wobei der Vorsprung (160) in dem Einschnitt (162) aufgenommen ist.

5. Filterrahmen (102) nach Anspruch 4, wobei der Vorsprung (160) keilförmig und der Einschnitt (162) V-förmig ist.

6. Filterrahmen (102) nach einem der vorhergehenden Ansprüche, wobei jede Gabelplatte (112) zumindest einen V-förmigen Plattenabschnitt (134) aufweist, welcher sich zwischen dem Frontkantenabschnitt (128) und einem entgegengesetzten Rückkantenabschnitt (136) der Gabelplatte (112) erstreckt, wobei die Mündung des V-förmigen Abschnitts (134) dem Frontkantenabschnitt (128) zugewandt ist, wobei der zumindest eine V-förmige Abschnitt (134) durch einen Kanal definiert ist, welcher zum Aufnehmen einer Gabel (140) der Mediumpackung (104) ausgebildet ist.

7. Filterrahmen (102) nach einem der vorhergehenden Ansprüche, ferner umfassend eine Rückplatte (114), welche mit Rückkantenabschnitten (136) der ersten und zweiten Gabelplatten (112) eingreift.

8. Filterrahmen (102) nach Anspruch 7, wobei die Rückplatte (114) mit der Gabelplatte (112) mittels eines Schnappverschlusselements (192) eingreift.

9. Filterrahmen (102) nach Anspruch 8, wobei das Schnappverschlusselement (192) eine elastische Zunge, welche auf der Gabelplatte (112) bereitgestellt ist, und eine Vertiefung umfasst, welche an der Rückplatte (114) bereitgestellt ist, und wobei die elastische Zunge sich senkrecht zur Rückkante der Gabelplatte erstreckt, und eine Schulter aufweist; und wobei die Schulter der elastischen Zunge in der Vertiefung aufgenommen ist.

10. Filterrahmen (102) nach Anspruch 9, wobei das Schnappverschlusselement (192) einen Vorsprung, welcher auf der Gabelplatte bereitgestellt ist und sich senkrecht zur Rückkante der Gabelplatte (112) erstreckt, und eine Vertiefung umfasst, welche an der Rückplatte (114) bereitgestellt ist, und wobei die Vertiefung so elastisch ist, dass der Vorsprung des Schnappverschlusselements in die Vertiefung eingeführt und in der Verschlussposition aufgenommen werden kann.

11. Filteranordnung umfassend einen Filterrahmen (102) nach einem der vorhergehenden Ansprüche, und eine Mediumpackung (104), welche im Filterrahmen (102) angeordnet ist.

12. Verfahren zum Montieren eines Filterrahmens (102) nach Anspruch 1, umfassend:
- Einführen des Frontkantenabschnitts (128) der Gabelplatte (112) in die entsprechende Nut (126) und Drücken des Rückhalteelements (144), welches am Frontkantenabschnitt (128) bereitgestellt ist, in Eingriff mit dem entsprechenden Rückhalteelement (146) der Frontplatte (110).

## Revendications

1. Cadre de filtre (102) destiné à recevoir un ensemble de supports (104), le cadre de filtre (102) comprenant une plaque avant (110), et des première et seconde plaques de pignon (112) disposées à des extrémités opposées (122, 124) de la plaque avant (110) et s'étendant principalement perpendiculairement à la plaque frontale (110), la plaque avant (110) comprenant une rainure (126) à chacune desdites extrémités (122, 124), une partie de bord avant (128) de chaque plaque de pignon (112) étant reçue dans une rainure respective parmi les rainures (126), et chaque plaque de pignon (112) comprenant un élément de retenue (144) qui comporte un élément d'encliquetage (148) disposé au niveau de la partie de bord avant (128), lequel élément de retenue (144) étant engagé avec un élément de retenue complémentaire (146) de la plaque avant (110).

2. Cadre de filtre (102) selon la revendication 1, dans lequel l'élément d'encliquetage (148) comprend une languette élastique (152) s'étendant perpendiculairement à un bord avant (128) de la plaque de pignon (112), et ayant un épaulement (156) ; l'élément de retenue complémentaire (146) comprenant un évidement (158) ; et l'épaulement (156) étant reçu dans l'évidement (158).

3. Cadre de filtre (102) selon la revendication 2, dans lequel la languette élastique (152) est disposée au niveau d'un bord latéral (129, 31) de la plaque de pignon (112), et dans lequel l'évidement (158) est disposé au niveau d'une bordure (118) de la plaque avant (110).

4. Cadre de filtre (102) selon l'une quelconque des revendications précédentes, dans lequel l'élément de retenue (144) comprend en outre une protubérance (160) faisant saillie de la partie de bord avant (128) perpendiculairement à l'extension principale de la plaque de pignon (112) ; l'élément de retenue complémentaire (146) comprenant en outre une encoche (162) disposée au niveau d'une bordure (118) de la plaque avant (110) ; et la protubérance (160) étant reçue dans l'encoche (162).

5. Cadre de filtre (102) selon la revendication 4, dans lequel la protubérance (160) est en forme de coin et l'encoche (162) est en forme de V.

6. Cadre de filtre (102) selon l'une quelconque des revendications précédentes, dans lequel chaque plaque de pignon (112) comporte au moins une partie de plaque en forme de V (134) s'étendant entre la partie de bord avant (128) et une partie de bord arrière opposée (136) de la plaque de pignon (112), l'embouchure de la partie en forme de V (134) faisant face à la partie de bord avant (128), ladite au moins une partie en forme de V (134) étant définie par un canal conçu pour recevoir un pignon (140) de l'ensemble de supports (104).

7. Cadre de filtre (102) selon l'une quelconque des revendications précédentes, comprenant en outre une plaque arrière (114) engagée avec des parties de bord arrière (136) des première et seconde plaques de pignon (112).

8. Cadre de filtre (102) selon la revendication 7, dans lequel la plaque arrière (114) est engagée avec la plaque de pignon (112) au moyen d'un élément d'encliquetage (192).

9. Cadre de filtre (102) selon la revendication 8, dans lequel l'élément d'encliquetage (192) comprend une languette élastique prévue sur la plaque de pignon (112) et un évidement prévu au niveau de ladite plaque arrière (114) et dans lequel la languette élastique s'étend perpendiculairement audit bord arrière de la plaque de pignon, et comportant un épaulement ; l'épaulement de la languette élastique étant reçu dans l'évidement.

10. Cadre de filtre (102) selon la revendication 9, dans lequel l'élément d'encliquetage (192) comprend une protubérance prévue sur la plaque de pignon et s'étendant perpendiculairement audit bord arrière de la plaque de pignon (112) et un évidement prévu au niveau de ladite plaque arrière (114) et dans lequel l'évidement est élastique de sorte que la protubérance de l'élément d'encliquetage peut être introduite dans l'évidement dans la position de verrouillage et reçue à l'intérieur de celui-ci.

11. Ensemble de filtre comprenant un cadre de filtre (102) selon l'une quelconque des revendications précédentes, et un ensemble de supports (104) disposé dans le cadre de filtre (102).

12. Procédé d'assemblage d'un cadre de filtre (102) selon la revendication 1, comprenant :
- l'insertion de la partie de bord avant (128) de la plaque de pignon (112) dans la rainure respective (126), et l'engagement de l'élément de retenue (144) prévu au niveau de la partie de bord avant (128) avec l'élément de retenue correspondant (146) de la plaque avant (110).
